Europäisches Patentamt

European Patent Office

Office européen des brevets

(19)

(11) Publication number: **0 143 901**

**B1**

(12) EUROPEAN PATENT SPECIFICATION

(45) Date of publication of patent specification: **29.06.88**

(51) Int. Cl.⁴: **G 01 N 30/62**

(21) Application number: **84110023.3**

(22) Date of filing: **22.08.84**

(54) Multifunctional detector.

(30) Priority: **23.11.83 US 555182**

(43) Date of publication of application:
**12.06.85 Bulletin 85/24**

(45) Publication of the grant of the patent:
**29.06.88 Bulletin 88/26**

(84) Designated Contracting States:
**CH DE GB LI SE**

(56) References cited:
**DE-A-2 650 234**
**US-A-3 422 667**
**US-A-3 814 939**
**US-A-3 920 334**
**US-A-4 181 853**
**US-A-4 183 791**
**US-A-4 343 767**

(73) Proprietor: **THE PERKIN-ELMER CORPORATION**
**761 Main Avenue**
**Norwalk Connecticut 06856-0181 (US)**

(72) Inventor: **Scott, Raymond P.W.**
**2 Indian Hill Road**
**Wilton Connecticut 06897 (US)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

EP 0 143 901 B1

Courier Press, Leamington Spa, England.

## Description

The present invention relates to a detector for determining a plurality of characteristics of a liquid sample in accordance with the generic clause of claim 1.

In liquid chromatography, a sample solution is passed through a separating column which is designed to partition the sample into its constituents such that the constituents are serially eluted. The eluent of the column is analyzed to characterize the constituents as they elute.

Generally, the characterization of liquid chromatography eluents is performed by determining the absorption, the fluorescence and the conductivity properties of the eluent.

Presently, the measurement of these properties requires at least two discrete detector mechanisms. From the US—A—3,920,334, it is known to simultaneously measure the absorbance and the fluorescence, but with this detector it is not possible to simultaneously measure the conductivity of the eluent.

Conductivity measurements of the eluent are carried out in a device disclosed in US—A—4343767 by using disk-shaped electrodes.

Hence, in order to investigate more than two single properties of an eluate, it has been necessary to either arrange multiple detectors in series or perform multiple separations with the same sample but with different detectors. The use of more than one detector in series, however, reduces the accuracy and reliability of the results because the band dispersion of the eluate is always increased as it is passed through each detector.

It is therefore the task of the present invention to provide a detector useful in liquid chromatography which can simultaneously detect all the required properties of an eluate.

This task is solved with a detector, having the features of claim 1.

Preferred embodiments of the invention are disclosed in the dependent claims.

Brief description of the drawing

The drawing, not drawn to scale, includes:

Figure 1 which is a cross-sectional view of a detector embodying the principles of the present invention;

Figure 2 which is a block diagram of a detector system employing a detector embodying the principles of the present invention;

Figure 3—which is a front view of a housing block for use in the detector shown in Figure 1; and

Figure 4—which is an assembly view of the detector shown in Figure 1.

Detailed description of the invention

A detector assembly, generally indicated at 10 in the drawing and embodying the principles of the present invention, includes a housing block 12 having a sample cell 14 defined therein. The detector assembly 10 also includes a source of radiation 16, means 18 for measuring the electrical conductivity of a liquid passing through the sample cell 14, means 20 for detecting radiation passing through the sample cell 14, and means 22 for detecting fluorescence radiation occurring within the sample cell 14. The detector assembly 10 is also provided with sample inlet and outlet conduits, 24 and 26, respectively, for passing a sample fluid through the sample cell 14.

In a preferred embodiment, the detector assembly 10 includes the source of light radiation 16 in a first opening 28 near one end 30 of the housing block 12, a first photodetector 32 in a second opening 34 at the other end 36 of the block 12, a second photodetector 38 in a third opening 40 in one sidewall 42 of the block 12, and first and second spaced electrodes, 44 and 46 respectively, extending through a second sidewall 48 of the block 12 and adapted to be contacted by liquid passing through the sample cell 14.

In addition, the housing block 12 includes a bore 50 therein for receiving the sample cell 14 and having a first optical window 52 at one end 54 of the sample cell 14 and a second optical window 56 at the other end 58 of the sample cell 14. Preferably, the second optical window 56 is shaped to disperse light passing therethrough from the sample cell 14 over more of the surface 60 of the first photodetector 32.

In the preferred embodiment, the first and second electrodes, 44 and 46 respectively, are hollow and serve as the inlet and outlet conduits, 24 and 26 respectively, and each is sandwiched between a pair of seals 62 which form a fluid tight seal about the ends of the sample cell 14 as well as electrically isolate the electrodes, 44 and 46.

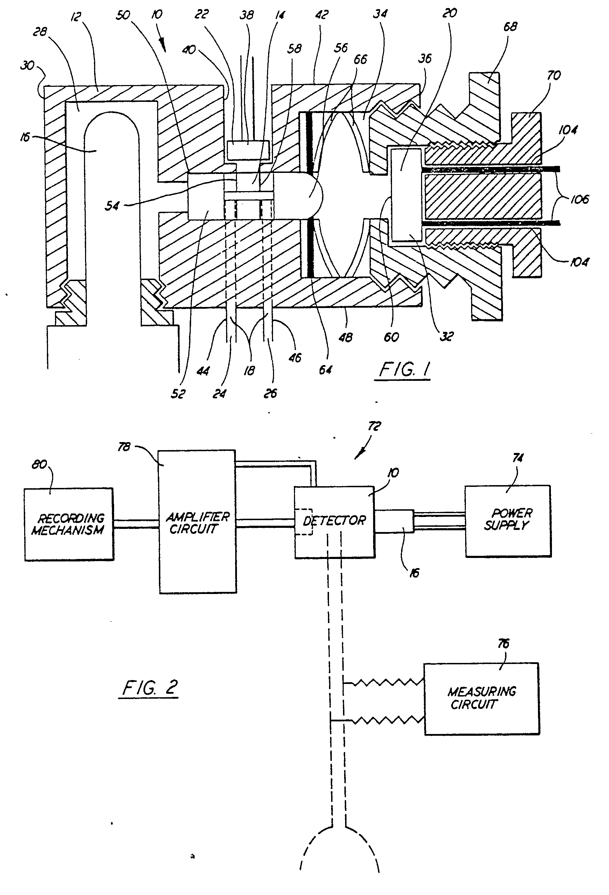

As shown in Figure 1, the second optical window 56 is securely positioned by means of a retaining washer 64 which is urged against the second window 56 by a pair of spring washers 66 held in place via a lens retaining nut 68. The first photodetector 32 is fixedly positioned within the lens retaining nut 68 by means of a detector retaining nut 70. In this fashion the spacing between the second optical window 56 and the first photodetector 32 remains constant. As a consequence, the detection measurement characteristics of the first photodetector 32, i.e., which primarily depends upon both the spacing between the second window 56 and the surface 60 of the photodetector 32 and the specific surface area of the photodetector used, remains constant for a given photodetector.

The detector assembly 10 is clearly advantageous since any one of a plurality of properties can be measured without interchanging the detector. Additionally, since more than one property can be measured simultaneously, all properties are measured on exactly the same sample.

A system, generally indicated at 72 in Figure 2 and specifically adapted to function with the detector assembly 10, for measuring a plurality of properties includes a high voltage power supply 74 for energizing the source of light radiation 16 thereof. The first and second electrodes, 44 and 46 respectively, are connected to a measuring circuit 76 which, in the preferred embodiment, includes a Wheatstone bridge type circuit for accurately measuring the impedance between the electrodes, 44 and 46.

The first and second photodetectors, 32 and 38 respectively, of the detector assembly 10 are electrically connected to a signal amplifier circuit 78 which provides a representative output signal to a recording mechanism 80. Preferably, the recording mechanism 80 includes, as at least as one mode thereof, a strip chart recorder for providing a chromatogram.

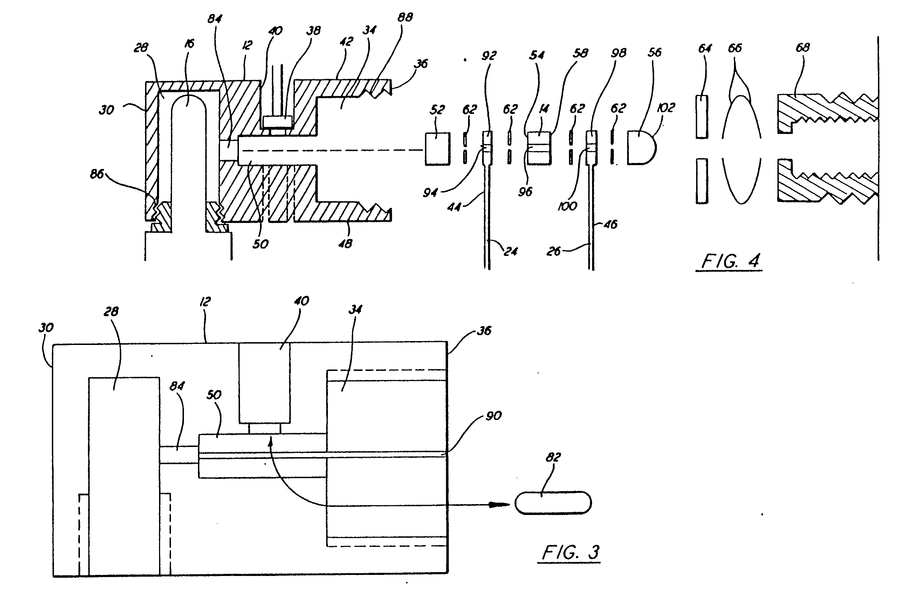

Another major advantage of the detector assembly 10 is the ease by which it can be fabricated and assembled. This advantage is more fully discussed hereinafter with respect to a specific embodiment shown in Figures 3 and 4.

A 2.5 cm by 2.5 cm by 3 cm long housing block 12 of opaque chemically resistant material, such as, for example, Delrin®, a registered trademark of the duPont Corporation, is initially machined as shown in Figure 3. Specifically, the lamp receiving first opening 28 is formed with a diameter of about 8 mm and axially located about 6 mm from the one end 30 of the block 12. A 3 mm×1.5 mm slot 82 is formed in the third opening 40 and opens into the bore 50 which passes through the center of the block 12. Preferably, the bore 50 is about 4.5 mm in diameter. A 2 mm long internal opening 84 of about 3 mm diameter is formed between the bore 50 and the first opening 28 to form a passage through which light radiation passes into the bore 50. The third opening 40, having a diameter of about 1 cm, is formed in the one sidewall 42 generally symmetrical about the slot 82. Preferably, the third opening 40 is axially perpendicular to the bore 50. This is sized to receive the second photodetector 38, i.e., which measures the fluorescence radiation.

A second opening 34, for receiving the lens retaining nut 68 and the first photodetector 32 is formed in the block 12 from the other end 36 to a depth of about 8 mm. Preferably, the first opening 28 is provided with an internal thread 86, for example, 3/8—24 threads per inch, and the second opening 34 is provided with internal threads 88, for example, 1/2—20 threads per inch. In order to simplify the final assembly of the electrically conductive inlet and outlet conduits 24 and 26, respectively, a 0.8 mm slot 90 is formed in the block 12 from the other end 36 and extends thereinto to the end of the bore 50, i.e., a distance on the order of about 1.9 cm.

Referring now more specifically to Figure 4, the final assembly of the detector assembly 10 is more fully discussed hereinafter.

As shown, the first optical window 52, in the form of a flat surfaces quartz lens, is inserted into the bore 50 from the other end 36 of the block 12. Adjacent that lens is a 0.125 mm thick polytetrafluoroethylene (PTFE) seal 62 followed by the mobile phase inlet conduit 24. As an alternative, the seals 62 can also be formed from other chemically resistant materials such as that known as Kapton®, a registered trademark of duPont Corporation. The mobile phase inlet conduit 24 includes a washer-like end 92 having a 0.75 mm diameter opening 94 therethrough. A second PTFE seal 62 is inserted and thereafter the sample cell 14 is inserted adjacent the second seal 62. Preferably, the sample cell 14 is a glass disk having an outside diameter of about 4.5 mm and an opening 96 therethrough which is 0.75 mm diameter by 2 mm long. For reasons well known in the art, such a sample cell 14 introduces very little band dispersion and is a relatively low volume cell. thereafter, a third PTFE seal 62 and the mobile phase outlet conduit 26, also having a washer-like end 98 and an opening 100 therethrough, are inserted and followed by a fourth PTFE seal 62. This arrangement completely seals the bore 50 and prevents fluid leakage through the slot 90. Further, this assembly 10 seals the electrodes, 44 and 46, and prevents sample leakage thereabout. Finally, the second window 56, preferably having a concave surface 102 distal the light source 16, is inserted and retained in place by retaining washer 64. In order to secure, and more exactly position the second window 56 with respect to the first photodetector 32, the second window 64, and hence the assembly within the bore 50, is retained in place by the pair of opposing spring washers 66 biased inwardly by means of the lens retaining nut 68. The lens retaining nut 68 includes an external thread 104 which mates with the internal thread 88 of the second opening 34.

In one particular embodiment, the sample cell 14 is opaque to the radiated light, with the consequence that light is only passed through the opening 96 into the cell 14, but transparent to the fluorescent radiation. For example, if the source of radiation 16 transmits in the approximate wavelength band of 180 nm to 280 nm and the fluorescent radiation of interest is greater than about 350 nm, such as the conditions when characterizing quinine sulfate, a borosilicate glass could be used for the sample cell 14. Of course, other light sources, such as, for example, light emitting diodes, infrared, could also be used with a corresponding selection of material for the sample cell 14.

Referring back to Figure 1, the first photodetector 32 is then secured within the lens retaining nut 68 by means of a detector retaining nut 70 having openings 104 therethrough for the electrical leads 106 thereof to be connected to the amplifier circuit 78 external the block 12. In the preferred embodiment, the electrically conductive inlet and outlet conduits, 24 and 26 respectively, are formed from stainless steel tubing having an inside diameter of about 0.25 mm and an outside diameter on the order of about 0.5 mm. The washer-like disk is provided at the ends thereof to not only ensure electrical contact between the conductive conduits, 24 and 26, and the fluid flowing therethrough, but also provides a surface against which the seals 62 can create a fluid tight seal for both the sample cell 14 and the electrodes 44 and 46.

The detector assembly 10 described herein not only provides the chromatographic advantages of low volume and low dispersion, but additionally provides major advantages in the selection and characterization of an eluate from a liquid chromatography separating column. As will be understood from the previous discussion relating to the system 72, shown in Figure 2, any one of three properties can be measured either individually, in pairs or all three simultaneously. Such availability of measuring possibilities on the identical amount of sample fluid provides reliable determinations and characterizations of eluents from separating columns.

The present invention has been described herein in relationship to a particular specific embodiment which embodiment is exemplary only. Hence, the present invention is deemed limited only by the appended claims.

## Claims

1. A detector for determining a plurality of characteristics of a liquid sample, the detector comprising a sample cell (14) with a central bore (96) defining an axis, through which a liquid can flow, said cell (14) having two opposite ends (54, 58), a source of radiation (16) disposed near to one end (54) of said cell for directing radiation through the liquid in said cell (14) in the general direction generally parallel said axis, a radiation sensor (20) disposed near to the other end of said cell (14) for detecting the level of the radiation from said source (16) after passing through the liquid in said cell, a fluorescence sensor means (38) disposed at the side of said cell so that fluorescence radiation from the liquid in said sample cell (14) impinges thereon but radiation from said radiation source (16) does not impinge thereon, characterized in that the detector comprises a housing block (12) in which the sample cell (14), said source of radiation (16), said radiation sensor and said fluorescence sensor means (38) are disposed and means (44, 46) for determining the electrical conductivity of said liquid in said cell are provided in said block (12), said conductivity determining means including an inlet conduit (24) at one end (54) of said sample cell (14) for guiding said liquid sample into said cell (14) and an outlet conduit (26) at the other end (54) of said sample cell (14) for removing said liquid sample from said sample cell (14), wherein said inlet and outlet conduits (24, 26) are electrically isolated and form electrodes (44, 46) of said conductivity determining means.

2. The detector as claimed in any one of the foregoing claims, further comprising means (62) for sealing said sample cell (14) said means (62) having openings therethrough whereby radiation can pass through both ends (54, 58) of said sample cell (14).

3. The detector as claimed in any one of the foregoing claims, comprising means (102) positioned between said sample cell (14) and said radiation sensor (20) for optically expanding the cross-section of radiation passing through said sample cell (14) prior to said radiation impinging upon said first radiation sensor (20).

4. The detector as claimed in any one of the foregoing claims, wherein said housing block (12) is an elongated housing block with two opposite faces (30, 36) and wherein a central opening (50) for the sample cell communicates with a first opening (28) in which the radiation source (16) is disposed and a second opening (34) for said detector at points intermediate opposite faces of said block.

5. The detector according to any one of the foregoing claims, wherein said cell is a cylindrical cell (14) made of glass.

6. The detector according to any one of the foregoing claims, wherein optical window means (52, 56) are disposed in the light path between the source (16) and the radiation sensor (20).

7. The detector according to any one of the foregoing claims, wherein said block is made of an insulative material.

8. The detector according to any one of the foregoing claims, wherein said sample cell (14) is a small volume cell having an outside diameter of about 4.5 mm and an opening (96) therethrough, which is 0.75 mm in diameter and about 2 mm in length.

9. The detector according to claims 3 and 6, wherein said means for optically expanding the cross-section of radiation comprises a window (56) which is located between the cell and said radiation sensor (20) and wherein said window comprises a divergent lens (102) to direct the radiation passing through said cell substantially onto the entire surface of said radiation sensor (20).

10. The detector according to any one of the foregoing claims, wherein said parts (92, 98) of said electrodes, which contact the end faces of the sample cell, have a hollow washer like form, so that radiation is allowed to pass therethrough.

11. The detector according to any one of the claims 2 to 10, wherein each said conduit means (24, 26), forming said electrodes, is made of an electrically conductive material.

## Patentansprüche

1. Detektor zur Bestimmung einer Mehrzahl von Eigenschaften einer Flüssigkeitsprobe, wobei der Detector aufweist eine Probenzelle (14), mit einer eine Achse festlegenden Mittelbohrung (96), durch die eine Flüssigkeit strömen kann, wobei die Zelle (14) zwei gegenüberliegende Enden (54, 58) aufweist, eine Strahlenquelle (16), die nahe dem einen Ende (54) der Zelle angeordnet ist, um eine Strahlung durch die Flüssigkeit in der Zelle (14) im wesentlichen in ihre Strahlengrundrichtung parallel zu der Achse zu richten, einen Strahlensensor (20), der nahe des anderen Endes der Zelle (14) angeordnet ist, um das Niveau der Strahlung von der Quelle (16) zu erfassen, nachdem diese durch die Flüssigkeit in der Zelle hindurchgegangen ist, eine Fluoreszenzerfassungseinrichtung (38), die an der Seite der Zelle angeordnet ist, so daß Fluoreszenzstrahlung von der Flüssigkeit in der Probzelle (14) auf diese auftrifft, jedoch Strahlung von der Strahlenquelle (16) auf die Fluoreszenzerfassungseinrichtung nicht auftrifft, dadurch gekennzeichnet, daß der Detektor aufweist einen Gehäuseblock (12) in dem die Probenzelle (14), die Strahlenquelle (16), der Strahlensensor und die Fluoreszenzerfassungseinrichtung (38) angeordnet sind und eine Einrichtung (44, 46) zur Bestimmung der elektrischen Leitfähigkeit der Flüssigkeit in der Zelle in dem Block (12) vorgesehen ist, wobei die Leitfähigkeitsbestimmungseinrichtung eine Einlaßleitung (24) an einem Ende (54) der Probenzelle (14) zur Führung der Flüssigkeitsprobe in die Zelle (14) und eine Auslaßleitung (26) am anderen Ende (54) der Probenzelle (14) zum Abführen der Flüssigkeitsprobe aus der Probenzelle (14) umfaßt, wobei die Einlaß- und Auslaßleitung (24, 26) elektrisch voneinander isoliert sind und Elektroden (44, 46) der Leitfähigkeitsbestimmungseinrichtung bilden.

2. Detektor nach einem der vorangehenden Ansprüche, mit außerdem einer Einrichtung (62) zum Abdichten der Probenzelle (14), wobei die Einrichtung (62) Durchgangsöffnungen aufweist, durch welche die Strahlung durch beide Enden (54, 58) der Probenzelle (14) hindurchtreten kann.

3. Detektor nach einem der vorangegangenen Ansprüche, mit einer Einrichtung (102), die zwischen der Probenzelle (14) und dem Strahlensensor (20) angeordnet ist, um optisch den Querschnitt der Strahlung, die durch die Probenzelle (14) hindurchgeht, vor dem Auftreffen der Strahlung auf den ersten Strahlungssensor (20) zu vergrößern.

4. Detektor nach einem der vorangegangenen Ansprüche, in dem der Gehäuseblock (12) ein langgestreckter Gehäuseblock mit zwei gegenüberliegenden Flächen (30, 36) ist und in dem eine Mittelöffnung (50) für die Probenzelle mit einer ersten Öffnung (28), in der die Strahlenquelle (16) angeordnet ist, sowie mit einer zweiten Öffnung (34) für den Detektor an Zwischenstellen zwischen den gegenüberliegenden Flächen des Blockes, im kommunizierender Verbindung ist.

5. Detektor nach einem der vorangegangenen Ansprüche, in dem die Zelle eine zylindrische Zelle (14) aus Glas ist.

6. Detektor nach einem der vorangegangenen Ansprüche, in dem eine optische Fenstereinrichtung (52, 56) in dem Lichtpfad zwischen der Quelle (16) und dem Strahlensensor (20) angeordnet ist.

7. Detektor nach einem der vorangegangenen Ansprüche, bei dem der Block aus einem Isoliermaterial besteht.

8. Detektor nach einem der vorangegangenen Ansprüche, bei dem die Probenzelle (14) eine geringvolumige Zelle ist, die einen Außendurchmesser von ungefähr 4,5 mm und eine Durchgangsöffnung (96) aufweist, die 0,75 mm im Durchmesser und ungefährt 2 mm in ihrer Länge ist.

9. Detektor nach Anspruch 3 und 6, wobei die Einrichtung zum optischen Vergrößern des Querschnittes der Strahlung ein Fenster (56) aufweist, das zwischen der Zelle und dem Strahlensensor (20) angeordnet ist und wobei das Fenster eine Zerstreuungslinse (102) aufweist, um die Strahlung, die durch die Zelle hindurchgeht, im wesentlichen auf die Gesamtfläche des Stahlensensors (20) zu richten.

10. Detektor nach einem der vorangegangenen Ansprüche, bei dem die Teile (92, 98) der Elektroden, die die Endflächen der Probenzelle berühren, eine hochscheibenförmige Gestalt aufweist, so daß die Strahlung durch diese hindurchgehen kann.

11. Detektor nach einem der Ansprüche 2 bis 10, wobei jede der Leitungseinrichtungen (24, 26), die die Elektroden bilden, aus einem elektrisch leitfähigen Material besteht.

**Revendications**

1. Détecteur pour déterminer un ensemble de caractéristiques d'un échantillon liquide, le détecteur comprenant une cellule d'échantillon (14) avec un perçage central (96) définissant un axe, à travers lequel un liquide peut passer, ladite cellule (14) ayant deux extrémités opposées (54, 58), une source de rayonnement (16) placée près d'une extrémité (54) de ladite cellule pour diriger le rayonnement à travers le liquide dans ladite cellule (14) dans la direction générale généralement parallèle audit axe, un capteur de rayonnement (20) placé près de l'autre extrémité de ladite cellule (14) pour détecter le niveau de rayonnement de ladite source (16) après avoir traversé le liquide dans ladite cellule, un moyen capteur de fluorescence (38) placé sur le côté de ladite cellule de sorte que le rayonnement de fluorescence du liquide dans ladite cellule (14) se heurte à lui mais que le rayonnement de ladite source de rayonnement (16) ne s'y heurte pas, caractérisé en ce que le détecteur comprend un bloc boîtier (12) dans lequel la cellule d'échantillon (14), ladite source de rayonnement (16), ledit capteur de rayonnement et ledit moyen capteur de fluorescence (38) sont placés et des moyens (44, 46) pour déterminer la conductivité électrique dudit liquide dans ladite cellule sont placés dans ledit bloc (12), lesdits moyens déterminant la conductivité comprenant un conduit d'entrée (24) à une extrémité (54) de ladite cellule d'échantillon (14) pour guider ledit échantillon liquide dans ladite cellule (14) et un conduit de sortie (26) à l'autre extrémité (54) de ladite cellule d'échantillon (14) pour évacuer ledit échantillon liquide de ladite cellule d'échantillon (14), où lesdits conduits d'entrée et de sortie (24, 26) sont isolés électriquement et forment des électrodes (44, 46) desdits moyens déterminant la conductivité.

2. Détecteur selon l'une quelconque des revendication précédentes, comprenant en outre des moyens (62) pour rendre étanche ladite cellule d'échantillon (14), lesdits moyens (62) ayant des ouvertures au travers de sorte que le rayonnement peut traverser les deux extrémités (54, 58) de ladite cellule d'échantillon (14).

3. Détecteur selon l'une quelconque des revendications précédentes, comprenant des moyens (102) placés entre ladite cellule d'échantillon (14) et ledit capteur de rayonnement (20) pour agrandir optiquement la coupe transversale du rayonnement traversant ladite cellule d'échantillon (14) avant que ledit rayonnement ne se heurte audit premier capteur de rayonnement (20).

4. Détecteur selon l'une quelconque des revendications précédentes, dans lequel ledit bloc boîtier (12) est un bloc boîtier allongé avec deux faces opposées (30, 36) et où une ouverture centrale (50) pour la cellule d'échantillon communique avec une première ouverture (28) dans laquelle la source de rayonnement (16) est placée et une seconde ouverture (34) pour ledit détecteur à des points intermédiaires entre les faces opposées dudit bloc.

5. Détecteur selon l'une quelconque des revendications précédentes, dans lequel ladite cellule est une cellule cylindrique (14) faite de verre.

6. Détecteur selon l'une quelconque des revendications précédentes, dans lequel des moyens à fenêtre optique (52, 56) sont placés dans le chemin lumineux entre la source (16) et le capteur de rayonnement (20).

7. Détecteur selon l'une quelconque des revendications précédentes, dans lequel ledit bloc est fait d'un matériau isolant.

8. Détecteur selon l'une quelconque des revendications précédentes, dans lequel ladite cellule d'échantillon (14) est une cellule de faible volume ayant un diamètre extérieur d'environ 4,5 mm et une ouverture (96) au travers, qui a 0,75 mm de diamètre et environ 2 mm de longueur.

9. Détecteur selon les revendications 3 et 6, dans lequel lesdits moyens pour agrandir optiquement la coupe transversale du rayonnement comprennent une fenêtre (56) qui est située entre la cellule et ledit capteur de rayonnement (20) et où ladite fenêtre comprend une lentille divergente (102) pour diriger le rayonnement traversant ladite cellule sensiblement sur la surface entière dudit capteur de rayonnement (20).

10. Détecteur selon l'une quelconque des revendications précédentes, dans lequel lesdites parties (92, 98) desdites électrodes, qui contactent les surfaces terminales de la cellule d'échantillon, ont une forme de rondelle creuse, de sorte que le rayonnement puisse passer au travers.

11. Détecteur selon l'une quelconque des revendications 2 à 10, dans lequel chaque moyen de conduit (24, 26), formant lesdites électrodes, est fait d'un matériau électroconducteur.

0 143 901

FIG. 1

FIG. 2

1

FIG. 4

FIG. 3